# FASCICULE DE BREVET EUROPEEN

(11) **EP 3 850 203 B1**
(45) Date de publication et mention de la délivrance du brevet: **21.02.2024**
(21) Numéro de dépôt: 19783587.9
(22) Date de dépôt: 04.09.2019
(51) Int. Cl.: F02D 11/10, F02D 41/02, F02D 41/10, F02D 41/12, B60W 20/10

(54) **PROCEDE DE COMMANDE DE COUPLE MOTEUR D'UN GROUPE MOTOPROPULSEUR PERMETTANT DE DESACTIVER LA COMPENSATION DE COUPLE INERTIEL**
VERFAHREN ZUR STEUERUNG DES MOTORDREHMOMENTS EINER ANTRIEBSEINHEIT MIT ERMÖGLICHUNG DER DEAKTIVIERUNG DER KOMPENSIERUNG DES MASSENTRÄGHEITSMOMENTS
METHOD FOR CONTROLLING ENGINE TORQUE OF A PROPULSION UNIT, MAKING IT POSSIBLE TO DEACTIVATE THE COMPENSATION FOR INERTIAL TORQUE

(30) Priorité: 14.09.2018 FR 1858277
(43) Date de publication de la demande: 21.07.2021
(73) Titulaire: Stellantis Auto SAS, 78300 Poissy (FR)
(72) Inventeur: COZ, Emmanuel, 92190 Meudon (FR)
(86) Numéro de dépôt international: PCT/FR2019/052036
(87) Numéro de publication internationale: WO 2020/053505

(56) Documents cités:
- EP-A1- 1 429 011
- EP-A2- 1 650 416
- FR-A1- 3 043 046
- US-A1- 2018 073 454
- US-B2- 8 401 757

## Description

Le domaine de l'invention concerne un procédé de commande de couple moteur d'un groupe motopropulseur de véhicule automobile.

Lors d'une accélération ou décélération d'un véhicule la chaîne cinématique du groupe motopropulseur du véhicule est affectée par des couples résistants qu'il est nécessaire de compenser pour répondre à la volonté du conducteur, notamment les couples résistants d'inertie des organes de transmission de couple en rotation entre une machine motrice et les roues du véhicule. A cet effet, de manière connue en soi les procédés de commande des couples moteurs sont configurés pour ajouter à la consigne de couple moteur d'une machine motrice un couple inertiel pour compenser les couples résistants de la chaîne cinématique. La composante de couple inertiel correspond à la dérivée du régime de rotation des roues multipliée par le moment d'inertie de la chaîne cinématique motrice entre la machine motrice et les roues du véhicule.

On connaît par exemple de l'état de la technique le document WO2010058470A1 décrivant un procédé de commande configurés pour corriger une consigne de couple moteur par un couple d'inertie. Un autre procédé est connu du document FR 3 043 046 A1. Par ailleurs, la gestion de commande des couples moteur est particulièrement délicate pour les architectures hybrides lors des transitions des modes de propulsion. Pour éviter les chocs sur les arbres de transmission lors d'une mise en accouplement du moteur thermique, la demanderesse a déposé la demande de brevet français FR2999138A1 décrivant un procédé de commande de couple du groupe motopropulseur prenant en compte la modification d'inertie de la chaîne cinématique.

Plus généralement, on a constaté que la compensation du couple inertiel peut s'avérer indésirable lors d'une situation de roulage présentant une forte pente où le véhicule perd de la vitesse alors même que la volonté du conducteur demande une accélération. En effet, lorsque le gradient de régime de rotation des roues est négatif, la composante de couple inertiel retranche du couple à la volonté du conducteur et réduit de manière plus significative la vitesse du véhicule. Cette situation oblige le conducteur à actionner la pédale d'accélérateur pour maintenir la vitesse désirée. Il en découle pour le conducteur une sensation de perte de puissance du groupe motopropulseur au niveau de la conduite. Cette situation altère l'agrément de conduite.

Il existe donc un besoin de résoudre les problèmes précités et de proposer un procédé de commande de couple d'un groupe motopropulseur améliorant l'agrément de conduite et les prestations de roulage du véhicule.

Plus précisément, l'invention concerne un procédé de commande d'un couple moteur à appliquer aux roues par aux moins un train de roues d'un groupe motopropulseur de véhicule automobile comprenant la détermination d'une consigne de couple de volonté du conducteur à transmettre aux roues du véhicule et le calcul d'une consigne de couple moteur à appliquer par le train de roues, ladite consigne de couple moteur étant calculée en fonction au moins de la consigne de volonté du conducteur et d'une composante de couple inertiel compensant un couple résistant d'inertie d'une chaîne cinématique motrice dudit train de roues. Selon l'invention, le procédé consiste à désactiver ladite composante de couple inertiel lors du calcul de la consigne de couple moteur lorsque ladite composante de couple inertiel s'oppose au couple de la consigne de volonté du conducteur.

Selon le procédé, la composante de couple inertiel est désactivée du calcul de la consigne de couple moteur en cas de détection que le couple de la composante de couple inertiel est négatif et le couple de la consigne de volonté du conducteur est positif.

Selon le procédé, la composante de couple inertiel est désactivée du calcul de la consigne de couple moteur en cas de détection que le couple de la composante de couple inertiel est positif et le couple de la consigne de volonté du conducteur est négatif.

Selon une variante pour détecter que ladite composante de couple inertiel s'oppose au couple de la consigne de volonté du conducteur, le procédé comporte les étapes suivantes :
- le calcul en continu du couple de la composante de couple inertiel en fonction du gradient de régime de rotation des roues du train de roues et du moment d'inertie de la chaîne cinématique motrice du train de roues,
- la détermination du signe du couple de la composante de couple inertiel,
- la comparaison du signe du couple de la composante de couple inertiel avec le signe du couple de la consigne de volonté du conducteur,
- la désactivation de la composante de couple inertiel étant fonction du résultat de ladite comparaison.

Selon une variante pour détecter que ladite composante de couple inertiel s'oppose au couple de la consigne de volonté du conducteur, le procédé comporte en outre les étapes suivantes :
- la mesure en continu du régime de rotation des roues du train de roues,
- le calcul du gradient de régime de rotation des roues du train de roues,
- la comparaison du signe du gradient du régime de rotation avec le signe du couple de la consigne de volonté du conducteur,
- la désactivation de la composante de couple inertiel étant fonction du résultat de ladite comparaison.

Plus précisément, selon l'invention la consigne de couple moteur est calculée selon la relation suivante : CM = CVC + [k]*CPI, où CM est la consigne de couple moteur, CVC la consigne de volonté du conducteur, k est un facteur d'application de la composante de couple inertiel pilotable à une valeur comprise entre 0 et 1, et CPI la composante de couple inertiel.

L'invention prévoit également une unité de commande d'un couple moteur à appliquer aux roues par aux moins un train de roues d'un groupe motopropulseur d'un véhicule automobile comportant des moyens de mettre en oeuvre le procédé de commande selon l'un quelconque des modes de réalisation précédents.

Selon une variante, l'unité de commande comporte un moyen de calcul du couple de la composante de couple inertiel, un moyen de comparaison du signe du couple de la composante de couple inertiel avec le signe du couple de la consigne de volonté du conducteur et un moyen de désactivation de la composante de couple inertiel lors du calcul de la consigne du couple moteur en fonction du résultat issu dudit moyen de comparaison.

Selon une variante, l'unité de commande comporte un moyen de calcul du gradient de régime de rotation des roues du train de roues, un moyen de comparaison du signe du gradient du régime de rotation avec le signe du couple de la consigne de volonté du conducteur et un moyen de désactivation de la composante de couple inertiel lors du calcul de la consigne du couple moteur en fonction du résultat issu dudit moyen de comparaison.

L'invention prévoit également un véhicule automobile comportant une unité de commande selon l'un quelconque des modes de réalisation précédents.

Grâce à l'invention, le procédé de commande de couple moteur favorise la volonté du conducteur en désactivant la composante de couple inertiel lorsque ladite composante s'oppose au couple de la volonté du conducteur.

D'autres caractéristiques et avantages de la présente invention apparaîtront plus clairement à la lecture de la description détaillée qui suit comprenant des modes de réalisation de l'invention donnés à titre d'exemples nullement limitatifs et illustrés par les dessins annexés, dans lesquels :
· la figure 1 représente schématiquement un groupe motopropulseur hybride de véhicule automobile destiné à mettre en oeuvre le procédé selon l'invention ;
· la figure 2 représente schématiquement une unité de commande d'un couple moteur à appliquer par un train de roues du groupe motopropulseur du véhicule ;
· la figure 3 est un graphique illustrant une situation de roulage présentant une pente de roulage croissante entraînant une décélération du véhicule et représentant des courbes des commandes de couple du groupe motopropulseur.

L'invention concerne un procédé de commande d'un couple moteur à appliquer aux roues par au moins un train de roues de véhicule automobile permettant de désactiver une composante de couple inertiel conventionnellement calculée pour compenser le couple résistant résultant de l'inertie de la chaîne cinématique motrice du véhicule.

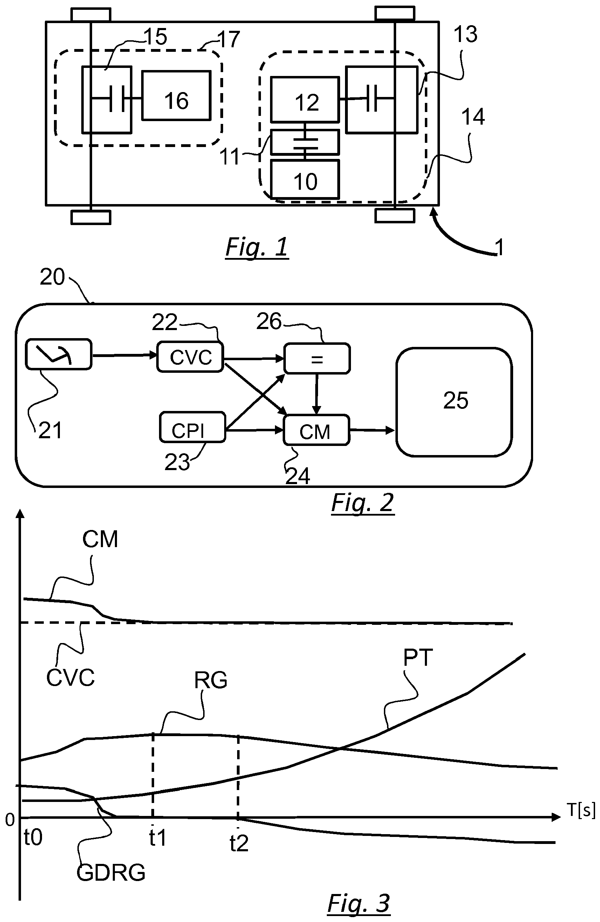

La figure 1 représente un véhicule automobile 1 comprenant un groupe motopropulseur hybride équipé d'un premier module de traction avant 14 relié mécaniquement au train de roues avant et d'un deuxième module de traction arrière 17 relié mécaniquement au train de roues arrière. Le premier module de traction et le deuxième module de traction sont encadrés sur la figure par des traits en pointillé. Le premier module de traction 14 comporte un moteur thermique 10, un dispositif d'embrayage 11 reliant une machine électrique de traction avant 12 au moteur thermique 10, et une boite de vitesses 13 dont l'axe de sortie est relié mécaniquement au train de roues avant. La machine électrique de traction avant 12 peut fournir un couple moteur aux roues, seule ou en complément du moteur thermique 10. Le deuxième module de traction 17 comporte une machine électrique de traction arrière 16 reliée mécaniquement au train de roues arrière par l'intermédiaire d'un dispositif de crabotage 17. Le procédé de commande selon l'invention s'applique bien entendu à d'autres technologies de groupe motopropulseur, tels des groupes motopropulseurs à motorisation hybride hydraulique/air comprimé, tout électrique ainsi que motorisation thermique seule, ou groupe motopropulseur comportant un seul module de traction.

La figure 2 représente une unité de commande 20 du groupe motopropulseur du véhicule en charge notamment de la commande d'un couple moteur à appliquer par un ou deux modules de traction du véhicule. Typiquement, l'unité de commande 20 est en charge également de coordonner les organes du groupe motopropulseur afin de configurer la chaîne cinématique du groupe motopropulseur dans les différents modes de roulage permis par cette architecture, soit dans cette variante un mode de roulage thermique, un mode de roulage entièrement électrique (par la machine avant et/ou la machine électrique arrière), un mode de roulage hybride économe et un mode de roulage sportif privilégiant les performances de l'ensemble des machines de traction (moteur thermique et machines électriques). L'unité de commande est un unique calculateur à circuits intégrés, toutefois il est envisageable que les fonctions de pilotage du groupe motopropulseur soient distribuées entre plusieurs calculateurs, parmi lesquels le calculateur du moteur thermique, de la boite de vitesses, de la machine électrique ou encore de la machine électrique. La distribution fonctionnelle et logicielle des fonctions de pilotage, en particulier la fonction en charge du procédé de commande du couple moteur à appliquer à un train de roues du véhicule, n'est aucunement limitative de l'invention. On ajoutera que l'unité de commande peut être un circuit électronique de traitement numérique ou analogique.

Plus précisément, l'unité de commande 20 comporte un premier module 21 de détermination d'une consigne de vitesse du véhicule. La consigne de vitesse est déterminée à partir de la position de la pédale d'accélérateur et la pédale de frein du véhicule, ou bien encore à partir d'une fonction de pilotage automatisé d'une trajectoire du véhicule. A partir de la consigne de vitesse du véhicule, un deuxième module 22 calcule une consigne de couple CVC représentative de la volonté du conducteur (ou de la fonction de pilotage automatisée).

De plus, de manière connue en soi, l'unité de commande comporte un troisième module 23 de calcul du couple d'une composante de couple inertiel CPI dont la fonction est de compenser le couple résistant d'inertie de la chaîne cinématique motrice du véhicule lors du roulage. La composante de couple inertiel CPI est un paramètre ayant une valeur de couple qui est calculée en continu en fonction du moment d'inertie de la chaîne cinématique motrice du véhicule et du gradient de régime des roues du véhicule. Plus précisément, le couple de la composante de couple inertiel est égal à CPI= J*d(Rg)/dt, où CPI est le couple de la composante inertielle (en exprimé N.m), J est le moment d'inertie de la chaîne cinématique motrice (exprimé en kg.m²) et Rg est le régime de rotation des roues du véhicule (exprimé en tours/minute). L'unité de commande 20 est apte à déterminer le signe du couple de la composante inertielle à partir du troisième module 23. Lors d'une accélération du véhicule, le couple inertiel est positif et lors d'une décélération le couple inertiel est négatif.

Lorsque le véhicule est motorisé par un groupe motopropulseur hybride, comme cela est le cas représenté en figure 1, le moment d'inertie est fonction de chacun des organes de transmission de couple de la chaîne cinématique motrice du mode de roulage en cours de configuration. On comprend donc que le moment d'inertie de la chaîne cinématique motrice peut être fonction, selon le mode de roulage en cours, des moments d'inertie de la machine électrique de traction arrière 16, du dispositif de crabotage 15, du moteur thermique 10, du dispositif d'embrayage 11, de la machine électrique de traction avant 12 et de la boite de vitesses 13.

L'unité de commande 20 comporte également un quatrième module 24 de calcul d'une consigne de couple moteur CM à appliquer aux roues du véhicule. La valeur de la consigne de couple moteur CM est fonction au moins de la consigne de couple de volonté du conducteur CVC et de la composante inertielle CPI.

Selon l'invention, lors du calcul de la consigne de couple moteur CM, l'unité de commande est configurée de sorte à désactiver la composante du couple inertiel CPI du calcul de la consigne de couple moteur CM lorsque le couple de la composante de couple inertiel CPI s'oppose au couple de la consigne de volonté du conducteur CVC. Cette fonctionnalité avantageuse de l'unité de commande permet ainsi d'éviter que la composante de couple inertiel retranche du couple à la consigne de la volonté du conducteur alors que celui-ci commande une accélération ou que la composante de couple inertiel ajoute du couple à la consigne de la volonté du conducteur alors que celui-ci commande une décélération.

Plus précisément, l'unité de commande 20 comporte un moyen de comparaison 26 du signe du couple de la composante de couple inertiel CPI avec le signe du couple de la consigne de volonté du conducteur CVC et un moyen de désactivation de la composante de couple inertiel en fonction du résultat issu dudit moyen de comparaison lors du calcul de la consigne de couple moteur CM par le quatrième module.

Plus précisément, la consigne de couple moteur CM est calculée selon la relation suivante :
CM = CVC + [k]*CPI, où CM est la consigne de couple moteur, CVC la consigne de volonté du conducteur, k est un facteur d'application de la composante de couple inertiel et CPI la composante de couple inertiel.

On notera que le facteur k est un paramètre pilotable par l'unité de commande et compris entre les valeurs 0 et 1 qui permet d'appliquer la compensation inertielle en fonction de la volonté conducteur. Ce facteur k est calculé à partir d'une cartographie deux dimensions dépendant de la volonté conducteur (signée en positif et négatif) et de la composante de couple inertiel physique (signé en positif et négatif). Ainsi, grâce au pilotage du facteur k, l'unité de commande est en capacité d'annuler et d'appliquer progressivement la composante de couple inertiel lorsque les signes de la volonté conducteur et du couple inertiel physiques s'opposent.

L'unité de commande 20 comporte également un cinquième module 25 dont la fonction est de distribuer la consigne de couple moteur CM à la machine motrice ou aux machines motrices du groupe motopropulseur pour appliquer la consigne de couple moteur aux roues du véhicule. Le module 25 est le module de pilotage du moteur thermique, de la machine électrique de traction avant, de la machine de traction arrière, ou un module de répartition du couple moteur entre les machines motrices accouplées aux roues.

Il est envisageable dans une variante que la désactivation de la composante de couple inertiel est fonction du signe du gradient du régime de rotation des roues du véhicule sans avoir recours à l'opération du calcul du couple inertiel. Cette variante permet avantageusement de simplifier la désactivation en détectant uniquement la valeur du signe du gradient du régime de rotation des roues. En particulier, ce mode de détection présente un temps de réponse plus rapide.

A cet effet, l'unité de commande comporte un module de mesure du régime de rotation des roues du train de roues, un moyen de calcul du gradient dudit régime de rotation, un moyen de comparaison du signe du gradient du régime de rotation avec le signe du couple de la consigne de volonté du conducteur et un moyen de désactivation de la composante de couple inertiel en fonction du résultat issu dudit moyen de comparaison lors du calcul de la consigne de couple moteur CM.

La figure 3 représente une situation de roulage du véhicule. La courbe CM représente la consigne de couple moteur CM à appliquer aux roues du véhicule exprimé en N.m, le trait en pointillé CVC représente une consigne de couple représentatif de la volonté du conducteur exprimé en N.m, la courbe RG représente le régime de rotation des roues du véhicule exprimé en tours/minutes, la courbe PT représente la pente de la route sur laquelle circule le véhicule et la courbe GDRG représente le gradient de régime des roues du véhicule. En axe d'abscisse le temps est représenté et exprimé en unité de seconde.

Plus précisément, selon cette situation de roulage on constate que le véhicule circule sur une route de pente montante et que la volonté du conducteur en couple reste maintenue à une valeur constante tout au long de la situation. A partir de t0 et jusqu'à l'instant t1, le régime de rotation des roues RG du véhicule est croissant. Le gradient de régime de rotation des roues GDRG est donc positif jusqu'à atteindre une valeur nulle à l'instant t1. Durant cette phase, le couple moteur CM est égal à la somme de la valeur en couple de la consigne de volonté du conducteur et de la valeur en couple de la composante inertielle.

Après t1, le régime de rotation des roues RG reste à une valeur constante du fait du roulage à une vitesse constante au fur et à mesure de la montée de la pente. A partir d'un instant t2, le véhicule commence à perdre de la vitesse. La valeur du régime de rotation des roues RG diminue et donc la valeur du gradient de régime GDRG est négative. Le couple de la composante de couple inertiel CPI est alors négatif, alors que le couple de la volonté du conducteur est positif.

Afin de réduire l'impact de la pente sur l'action du conducteur sur la pédale d'accélérateur, le procédé de commande du couple moteur mis en oeuvre par l'unité de commande détecte à l'instant t2 que le couple de la composante de couple inertiel CPI, calculé à partir du gradient de régime des roues GDRG du véhicule et du moment d'inertie de la chaîne cinématique motrice, s'oppose au couple de la consigne de volonté du conducteur CVC. A partir de l'instant t2, du fait de cette détection l'unité de commande désactive alors la composante de couple inertiel lors du calcul du couple moteur CM. La consigne de couple moteur à appliquer aux roues du véhicule est alors identique à la valeur de la consigne du conducteur CVC du fait que le couple inertiel n'est pas pris en compte lors du calcul du couple moteur CM. Il n'est alors pas nécessaire pour le conducteur d'enfoncer un peu plus la pédale d'accélérateur. La désactivation de la composante de couple inertiel est opérée en pilotant le facteur k de la valeur 1 à la valeur 0. La modification de la valeur du facteur k est de préférence opérée progressivement afin que cette opération ne soit pas perceptible par le conducteur.

Ainsi, selon le procédé dans une situation normale de roulage, le couple moteur CM est égal à la somme du couple CVC et du couple de la composante inertielle CPI, représentée sur le graphique aux instants avant t2. Dans la situation de roulage après t2, le couple CM est cette fois égal au couple CVC.

Dans une autre situation de roulage où le couple de la consigne de volonté du conducteur est négatif mais le couple de la composante inertielle est positif lors d'une phase d'accélération du véhicule, par exemple sur une route en pente descendante, le procédé de commande désactive alors la composante de couple inertiel pour empêcher lors du calcul du couple moteur CM l'ajout du couple inertiel à la consigne de volonté du conducteur. Le procédé évite ainsi au conducteur d'ordonner un freinage. La désactivation de la composante de couple inertiel est opérée en pilotant le facteur k de la valeur 1 à la valeur 0. La modification de la valeur du facteur k est de préférence opérée progressivement afin que cette opération ne soit pas perceptible par le conducteur.

Deux variantes d'exécution du procédé de commande sont envisageables pour désactiver la composante de couple inertiel lorsque celle-ci s'oppose à la volonté du conducteur. Dans une première variante, le procédé de commande comporte une étape de calcul en continu du couple de la composante de couple inertiel CPI en fonction du gradient GDRG de régime de rotation des roues du train de roues et du moment d'inertie de la chaîne cinématique motrice du train de roues, puis une étape de détermination du signe du couple de la composante de couple inertiel CPI, puis une étape de comparaison du signe du couple de la composante de couple inertiel CPI avec le signe du couple de la consigne de volonté du conducteur CVC, et enfin une étape de désactivation de la composante de couple inertiel en fonction du résultat de ladite comparaison. La désactivation s'effectue lorsque les signes de couples comparés s'opposent.

Dans une deuxième variante, le procédé est apte à détecter que la composante inertielle s'oppose à la consigne de volonté du conducteur à partir d'une information représentative du gradient de régime de rotation des roues ou d'une information mesurée de l'accélération angulaire des roues. Cette deuxième variante a pour avantage d'éviter le calcul du couple de la composante inertielle pour la détection. A cet effet, le procédé de commande comporte les étapes de mesure en continu du régime de rotation des roues du train de roues, du calcul du gradient de régime de rotation des roues dudit train de roues, de comparaison du signe du gradient du régime de rotation avec le signe du couple de la consigne de volonté du conducteur et enfin la désactivation de la composante de couple inertiel en fonction du résultat de ladite comparaison. La désactivation s'effectue lorsque le signe du gradient de régime de rotation s'oppose au signe du couple de la consigne de volonté du conducteur.

On a décrit que le signe de la composante inertiel se détermine à partir du calcul du couple inertiel ou à partir du gradient du régime de rotation des roues du véhicule. Il est bien entendu que la détermination du signe de la composante inertielle est déterminable également à partir d'une mesure fournie par un capteur d'accélération angulaire des roues ou tout autre moyen électronique apte à fournir une information représentative du signe du couple de la composante inertielle.

## Revendications

1. Procédé de commande d'un couple moteur à appliquer aux roues par aux moins un train de roues d'un groupe motopropulseur de véhicule automobile (1) comprenant la détermination d'une consigne de couple de volonté du conducteur (CVC) à transmettre aux roues du véhicule et le calcul d'une consigne de couple moteur (CM) à appliquer par le train de roues, ladite consigne de couple moteur (CM) étant calculée en fonction au moins de la consigne de volonté du conducteur (CVC) et d'une composante de couple inertiel (CPI) compensant un couple résistant d'inertie d'une chaine cinématique motrice (14 ;17) dudit train de roues, consistant à désactiver ladite composante de couple inertiel (CPI) lors du calcul de la consigne de couple moteur (CM) lorsque ladite composante de couple inertiel (CPI) s'oppose au couple de la consigne de volonté du conducteur, la consigne de couple moteur (CM) étant calculée selon la relation suivante : CM = CVC + [k]*CPI, où CM est la consigne de couple moteur, CVC la consigne de volonté du conducteur, k est un facteur d'application de la composante de couple inertiel pilotable à une valeur comprise entre 0 et 1, et CPI la composante de couple inertiel.

2. Procédé de commande selon la revendication 1, **caractérisé en ce que** la composante de couple inertiel (CPI) est désactivée du calcul de la consigne de couple moteur (CM) en cas de détection que le couple de la composante de couple inertiel (CPI) est négatif et le couple de la consigne de volonté du conducteur (CVC) est positif.

3. Procédé de commande selon la revendication 1 ou 2, **caractérisé en ce que** la composante de couple inertiel (CPI) est désactivée du calcul de la consigne de couple moteur (CM) en cas de détection que le couple de la composante de couple inertiel (CPI) est positif et le couple de la consigne de volonté du conducteur (CVC) est négatif.

4. Procédé de commande selon l'une quelconque des revendications 1 à 3, **caractérisé en ce qu'**il comporte les étapes suivantes :
- le calcul en continu du couple de la composante de couple inertiel (CPI) en fonction du gradient de régime de rotation des roues du train de roues et du moment d'inertie de la chaine cinématique motrice (14 ;17) du train de roues,
- la détermination du signe du couple de la composante de couple inertiel (CPI),
- la comparaison du signe du couple de la composante de couple inertiel (CPI) avec le signe du couple de la consigne de volonté du conducteur (CVC),
- la désactivation de la composante de couple inertiel étant fonction du résultat de ladite comparaison.

5. Procédé de commande selon l'une quelconque des revendications 1 à 3, **caractérisé en ce qu'**il comporte en outre les étapes suivantes :
- la mesure en continu du régime de rotation (RG) des roues du train de roues,
- le calcul du gradient de régime de rotation (GDRG) des roues du train de roues,
- la comparaison du signe du gradient du régime de rotation avec le signe du couple de la consigne de volonté du conducteur,
- la désactivation de la composante de couple inertiel (CPI) étant fonction du résultat de ladite comparaison.

6. Unité de commande (20) d'un couple moteur à appliquer aux roues par aux moins un train de roues d'un groupe motopropulseur d'un véhicule automobile, **caractérisée en ce qu'**elle comporte des moyens de mettre en oeuvre le procédé de commande selon l'une quelconque des revendications 1 à 5.

7. Unité de commande (20) selon la revendication 6, **caractérisée en ce qu'**elle comporte un moyen de calcul (23) du couple de la composante de couple inertiel (CPI), un moyen de comparaison (26) du signe du couple de la composante de couple inertiel (CPI) avec le signe du couple de la consigne de volonté du conducteur (CVC) et un moyen de désactivation de la composante de couple inertiel (CPI) lors du calcul de la consigne du couple moteur (CM) en fonction du résultat issu dudit moyen de comparaison.

8. Unité de commande (20) selon la revendication 6, **caractérisé en ce qu'**elle comporte un moyen de calcul du gradient de régime de rotation (GDRG) des roues du train de roues, un moyen de comparaison du signe du gradient du régime de rotation (GDRG) avec le signe du couple de la consigne de volonté du conducteur (CVC) et un moyen de désactivation de la composante de couple inertiel lors du calcul de la consigne du couple moteur (CM) en fonction du résultat issu dudit moyen de comparaison.

9. Véhicule automobile **caractérisé en ce qu'**il comporte une unité de commande selon l'une quelconque des revendications 6 à 8.

## Patentansprüche

1. Verfahren zum Steuern eines Motordrehmoments, das von mindestens einem Radsatz eines Antriebsstrangs eines Kraftfahrzeugs (1) auf die Räder aufgebracht werden soll, umfassend das Bestimmen eines vom Fahrer gewünschten Drehmomentsollwerts (CVC), der auf die Räder des Fahrzeugs übertragen werden soll, und das Berechnen eines vom Radsatz aufzubringenden Motordrehmoment-Sollwerts (CM), wobei der Motordrehmoment-Sollwert (CM) zumindest auf der Grundlage des Fahrerwillen-Sollwerts (CVC) und einer Trägheitsdrehmomentkomponente (CPI) zur Kompensation einer Widerstandsträgheit berechnet wird Drehmoment einer treibenden kinematischen Kette (14; 17) des Räderwerks, **dadurch gekennzeichnet, dass** es darin besteht, die Trägheitsdrehmomentkomponente (CPI) während der Berechnung des Motordrehmomentsollwerts (CM) zu deaktivieren, wenn die Trägheitsdrehmomentkomponente (CPI) entgegenwirkt das Drehmoment des Fahrerwillens-Sollwerts, wobei der Motordrehmoment-Sollwert (CM) gemäß der folgenden Beziehung berechnet wird: CM = CVC + [k]*CPI, wobei CM der Motordrehmoment-Sollwert ist, CVC der Fahrerwillens-Sollwert ist, k ein ist Anwendungsfaktor der steuerbaren Trägheitsdrehmomentkomponente bei einem Wert zwischen 0 und 1 und CPI die Trägheitsdrehmomentkomponente.

2. Steuerverfahren nach Anspruch 1, **dadurch gekennzeichnet, dass** die Trägheitsdrehmomentkomponente (CPI) aus der Berechnung des Motordrehmomentsollwerts (CM) deaktiviert wird, wenn erkannt wird, dass das Drehmoment der Trägheitsdrehmomentkomponente (CPI) negativ ist und die Das Eingangsdrehmoment (CVC) des Fahrers ist positiv.

3. Steuerverfahren nach Anspruch 1 oder 2, **dadurch gekennzeichnet, dass** die Trägheitsdrehmomentkomponente (CPI) aus der Berechnung des Motordrehmomentsollwerts (CM) deaktiviert wird, wenn erkannt wird, dass das Drehmoment der Trägheitsdrehmomentkomponente (CPI) positiv ist und das vom Fahrer gewünschte Drehmoment (CVC) ist negativ.

4. Kontrollverfahren nach einem der Ansprüche 1 bis 3, **dadurch gekennzeichnet, dass** es die folgenden Schritte umfasst:
- die kontinuierliche Berechnung des Drehmoments der Trägheitsdrehmomentkomponente (CPI) in Abhängigkeit des Drehzahlgradienten der Räder des Räderwerks und des Trägheitsmoments der antreibenden kinematischen Kette (14;17) des Räderwerks,
- Ermitteln des Vorzeichens des Drehmoments der Trägheitsdrehmomentkomponente (CPI),
- der Vergleich des Vorzeichens des Drehmoments der Trägheitsdrehmomentkomponente (CPI) mit dem Vorzeichen des Drehmoments des Fahrerwillenssollwerts (CVC),
- die Deaktivierung der Trägheitsdrehmomentkomponente ist eine Funktion des Ergebnisses des Vergleichs.

5. Kontrollverfahren nach einem der Ansprüche 1 bis 3, **dadurch gekennzeichnet, dass** es außerdem die folgenden Schritte umfasst:
- kontinuierliche Messung der Drehzahl (RG) der Räder des Räderwerks,
- Berechnen des Drehzahlgradienten (GDRG) der Räder des Räderwerks,
- der Vergleich des Vorzeichens des Gradienten der Drehzahl mit dem Vorzeichen des Drehmoments der Fahrerwillensanweisung,
- die Deaktivierung der Trägheitsdrehmomentkomponente (CPI) ist eine Funktion des Ergebnisses des Vergleichs.

6. Steuereinheit (20) eines Motordrehmoments, das von mindestens einem Radsatz eines Antriebsstrangs eines Kraftfahrzeugs auf die Räder ausgeübt werden soll, **dadurch gekennzeichnet, dass** sie Mittel zur Durchführung des Steuerverfahrens nach einem der Ansprüche 1 bis 5 umfasst.

7. Steuereinheit (20) nach Anspruch 6, **dadurch gekennzeichnet, dass** sie ein Mittel zum Berechnen (23) des Drehmoments der Trägheitsdrehmomentkomponente (CPI) und ein Mittel zum Vergleichen (26) des Vorzeichens des Drehmoments der Trägheitsdrehmomentkomponente umfasst (CPI) mit dem Vorzeichen des Drehmomentsollwerts des Fahrers (CVC) und einem Mittel zum Deaktivieren der Trägheitsdrehmomentkomponente (CPI) während der Berechnung des Motordrehmomentsollwerts (CM) in Abhängigkeit vom Ergebnis des Vergleichsmittels .

8. Steuereinheit (20) nach Anspruch 6, **dadurch gekennzeichnet, dass** sie Mittel zur Berechnung des Drehzahlgradienten (GDRG) der Räder des Räderwerks, Mittel zum Vergleich des Vorzeichens des Drehzahlgradienten (GDRG) mit dem Vorzeichen von umfasst das Drehmoment des Fahrerwillenssollwerts (CVC) und ein Mittel zum Deaktivieren der Trägheitsdrehmomentkomponente während der Berechnung des Motordrehmomentsollwerts (CM) als Funktion des Ergebnisses des genannten Vergleichsmittels.

9. Kraftfahrzeug, **dadurch gekennzeichnet, dass** es ein Steuergerät nach einem der Ansprüche 6 bis 8 umfasst.

## Claims

1. Method for controlling an engine torque to be applied to the wheels by at least one set of wheels of a powertrain of a motor vehicle (1) comprising determining a driver's desired torque setpoint (CVC) to be transmitted to the wheels of the vehicle and the calculation of an engine torque setpoint (CM) to be applied by the set of wheels, said engine torque setpoint (CM) being calculated according to at least the driver's will setpoint (CVC) and an inertial torque component (CPI) compensating a resistant inertia torque of a driving kinematic chain (14; 17) of said train of wheels, **characterized in that** it consists of deactivating said inertial torque component (CPI) during calculation of the motor torque setpoint (CM) when said inertial torque component (CPI) opposes the torque of the driver's will setpoint, the motor torque setpoint (CM) being calculated according to the following relationship: CM = CVC + [k]*CPI, where CM is the motor torque setpoint, CVC the driver's will setpoint, k is an application factor of the controllable inertial torque component at a value between 0 and 1, and CPI the inertial torque component.

2. Control method according to claim 1, **characterized in that** the inertial torque component (CPI) is deactivated from the calculation of the motor torque setpoint (CM) in the event of detection that the torque of the inertial torque component (CPI) is negative and the driver's input torque (CVC) is positive.

3. Control method according to claim 1 or 2, **characterized in that** the inertial torque component (CPI) is deactivated from the calculation of the motor torque setpoint (CM) in the event of detection that the torque of the inertial torque component (CPI ) is positive and the driver's desired torque (CVC) is negative.

4. Control method according to any one of claims 1 to 3, **characterized in that** it comprises the following steps:
- the continuous calculation of the torque of the inertial torque component (CPI) as a function of the rotational speed gradient of the wheels of the wheel train and the moment of inertia of the driving kinematic chain (14;17) of the wheel train ,
- determining the sign of the torque of the inertial torque component (CPI),
- the comparison of the sign of the torque of the inertial torque component (CPI) with the sign of the torque of the driver's will setpoint (CVC),
- the deactivation of the inertial torque component being a function of the result of said comparison.

5. Control method according to any one of claims 1 to 3, **characterized in that** it further comprises the following steps:
- continuous measurement of the rotational speed (RG) of the wheels of the wheel train,
- calculating the rotational speed gradient (GDRG) of the wheels of the wheel train,
- the comparison of the sign of the gradient of the rotation speed with the sign of the torque of the driver's will instruction,
- the deactivation of the inertial torque component (CPI) being a function of the result of said comparison.

6. Control unit (20) of a motor torque to be applied to the wheels by at least one set of wheels of a powertrain of a motor vehicle, **characterized in that** it comprises means for implementing the control method according to any one of claims 1 to 5.

7. Control unit (20) according to claim 6, **characterized in that** it comprises a means of calculating (23) the torque of the inertial torque component (CPI), a means of comparing (26) the sign of the torque of the inertial torque component (CPI) with the sign of the torque of the driver's will setpoint (CVC) and a means of deactivating the inertial torque component (CPI) during the calculation of the motor torque setpoint (CM) in function of the result from said means of comparison.

8. Control unit (20) according to claim 6, **characterized in that** it comprises means for calculating the rotation speed gradient (GDRG) of the wheels of the wheel train, means for comparing the sign of the rotation speed gradient (GDRG) with the sign of the torque of the driver's will setpoint (CVC) and a means of deactivating the inertial torque component during the calculation of the motor torque setpoint (CM) as a function of the result from said means of comparison .

9. Motor vehicle **characterized in that** it comprises a control unit according to any one of claims 6 to 8.
